(19) Europäisches Patentamt
European Patent Office
Office européen des brevets

(11) **EP 0 704 640 B1**

(12) **EUROPÄISCHE PATENTSCHRIFT**

(45) Veröffentlichungstag und Bekanntmachung des Hinweises auf die Patenterteilung:
**14.10.1998 Patentblatt 1998/42**

(51) Int Cl.⁶: **F16F 13/10**

(21) Anmeldenummer: **95113072.3**

(22) Anmeldetag: **19.08.1995**

(54) **Motorlager für Kraftfahrzeuge**

Engine support for motor vehicles

Support pour moteurs de véhicules automobiles

(84) Benannte Vertragsstaaten:
**ES FR GB IT SE**

(30) Priorität: **01.10.1994 DE 4435271**

(43) Veröffentlichungstag der Anmeldung:
**03.04.1996 Patentblatt 1996/14**

(73) Patentinhaber: **Lemförder Metallwaren AG**
**49448 Lemförde (DE)**

(72) Erfinder:
• **Meyering, Frank**
**D-49393 Lohne (DE)**
• **Sprang, Rüdiger**
**D-56112 Niederlahnstein (DE)**

(56) Entgegenhaltungen:
EP-A- 0 332 902        DE-C- 3 225 700
US-A- 4 742 999        US-A- 4 762 309

## Beschreibung

Die Erfindung bezieht sich auf ein Motorlager gemäß den Merkmalen des Oberbegriffs des Anspruchs 1.

In EP 0 332 902 A2 wird ein ein hydraulisch dämpfendes Zweikammer-Motorlager beschrieben, dessen mit Flüssigkeit gefüllte und gummielastische Umfangswände aufweisende Kammern über einen, in einer starren Zwischenplatte angeordneten Kanal in Verbindung stehen, und wobei in der zentral offenen, horizontal in zwei symmetrische Hälften geteilten Zwischenplatte eine elastische Gummimembran fest eingespannt ist. Die Gummimembran weist zunächst einen umlaufenden, außen zylindrischen Randbereich auf. Dieser Randbereich geht in einen horizontalen Steg geringer Dicke über, der seinerseits mit einem sich stetig verdickenden Membranmittelteil verbunden ist.

Der zylindrische Randbereich der Membran ragt bis in den in die Zwischenplattenhälften eingelassenen Überströmkanal hinein und bildet dadurch mit seinem Außenumfang die radial innenliegende Begrenzung dieses Überströmkanals.

Die den sich verdickenden Membranmittelbereich überdeckenden, innenliegenden Randbereiche der Zwischenplattenhälften weisen auf ihrer Unterseite einen zur Membrankontur angenähert parallelen Verlauf auf und begrenzen zur Oberfläche der Membran einen Freiweg vorgegebener Größe.

Aus DE 32 25 700 C1 ist ein weiteres Motorlager bekannt. Die beiden Kammern sind bei dieser Ausführung in einem horizontal geteilten Gehäuse unter einem die statischen Belastungen aufnehmenden Federelement angeordnet. Eine aus zwei Scheiben bestehende Ventilplatte bildet die gemeinsame Wand zwischen den beiden mit der Dämpfungsflüssigkeit gefüllten Kammern. In der Ventilplatte erstreckt sich horizontal ein die beiden Kammern miteinander verbindender Drosselkanal, und außerdem ist in einer Käfigausbildung der beiden Scheiben eine Entkopplungsmembran aus einem elastisch verformbaren Werkstoff mit einem axialen Bewegungsspiel angeordnet. Schwingungen großer Amplitude werden nach dem Wirkungsprinzip solcher Motorlager bei der Einfederung durch Verdrängung der Dämpfungsflüssigkeit aus der einen Kammer in die andere Kammer und bei der Ausfederung durch die Rückführung der Dämpfungsflüssigkeit gedämpft. Dazu ist die Geometrie des Drosselkanals in der Ventilplatte funktionsabhängig definiert. Schwingungen kleinerer Amplitude werden durch die Entkopplungsmembran entkoppelt, die zwischen den Stützgitter bildenden Käfigwandungen mit axialem Spiel beweglich ist, so daß sie bei Schwingungen mit kleiner Amplitude in dem Raum zwischen den Stützgittern hin und her schwingen kann, um dadurch einen Druckausgleich zwischen den beiden Kammern im Bereich dieses Spielraumes zu bewirken, ohne daß dabei Flüssigkeit aus der einen Kammer über den Drosselkanal in die andere Kammer verdrängt wird. Bei kleinen Amplituden im akustisch relevanten Bereich ist die Entkopplungsmembran somit frei beweglich. Dadurch kann es zu unerwünschten Klappergeräuschen und auch zu einem zu großen Absinken der Dämpfung bei großen Amplituden kommen. Bei großen Amplituden stützt sich die Entkopplungsmembran gegen den Käfig ab, so daß der Durchgang im Bereich der Entkopplungsmembran hydraulisch geschlossen ist.

Es ist Aufgabe der vorliegenden Erfindung, mit einer kostengünstig herstellbaren Entkopplungsmembran und durch eine besondere Ausbildung des Käfigs eine Geräuschentwicklung in dem Motorlager bei Schwingungen mit kleiner Amplitude zu unterbinden.

Zur Lösung dieser Aufgabe ist erfindungsgemäß eine Ausbildung mit den Merkmalen nach dem Kennzeichen des Patentanspruches 1 vorgesehen.

Danach bildet eine mit gleichbleibendem Querschnitt ausgeführte Gummischeibe die Entkopplungsmembran, wobei diese Gummischeibe ohne axiales Spiel senkrecht zur gemeinsamen Kammerwand in dem Käfig angeordnet ist. Im Wirkungsbereich von Schwingungen mit kleiner Amplitude wölbt sich diese Gummischeibe in die durch schräge Wandflächen begrenzten Durchbrechungen des Käfigs hinein. Ein schlagartiges Auftreffen der sich verformenden Entkopplungsmembran auf Gegenflächen wird dabei vermieden, so daß auch Klappergeräusche nicht mehr entstehen können. In bevorzugter Ausgestaltung des Erfindungsgedankens wird der Rand der Entkopplungsmembran mit einer geringen Vorspannung in der Ausnehmung zwischen den beiden Scheiben der Ventilplatte radial beweglich eingesetzt, so daß die die Entkopplungsmembran bildende Gummischeibe beim Einwölben in die Durchbrechungen der Käfigwandungen radial zur Mitte schrumpfen kann und sich dabei aus der sanften Randeinspannung herauszieht. Nach Entlastung schiebt sich der Rand der Gummischeibe durch die Eigenelastizität des Materials der Gummischeibe selbsttätig nach außen in die sanfte Einspannlage zurück. Es erfolgt dadurch eine leichte Reibungsdämpfung in Radialrichtung beim Eintauchen der Entkopplungsmembran in die konische Senkung der Durchbrechungen, jedoch nur soweit, daß die Entkopplungsmembran in ihrer neutralen Mittenlage sich wieder auf ihren Ausgangsdurchmesser zurückdehnen kann und danach das Eintauchen in die Senkung der Durchbrechung auf der gegenüberliegenden Seite erfolgt.

In bevorzugter Ausgestaltung der Erfindungsmerkmale ist vorgesehen, daß die Käfigdurchbrechungen symmetrisch angeordnet und als Bohrungen mit einer konischen Senkung auf der der Entkopplungsmembran zugewandten Seite ausgeführt sind. Eine solche Ausbildung erfüllt die durch die Erfindung angestrebte Wirkung und ermöglicht eine kostengünstige Herstellung. Der durch die Senkung erzielte Konus ist vorzugsweise so auszubilden, daß das bei der zu entkoppelnden Amplitude verdrängte Flüssigkeitsvolumen in den sich oberhalb der Membran ausbildenden Ausbuchtungen aufgenommen werden kann und der Konuseintrittsdurchmesser so ausgelegt ist, daß die Summensteifigkeit der Membran auf die zulässige dynamische Verhärtung des Lagers abgestimmt ist.

In der Zeichnung ist ein Ausführungsbeispiel der Erfindung dargestellt. Es zeigen:

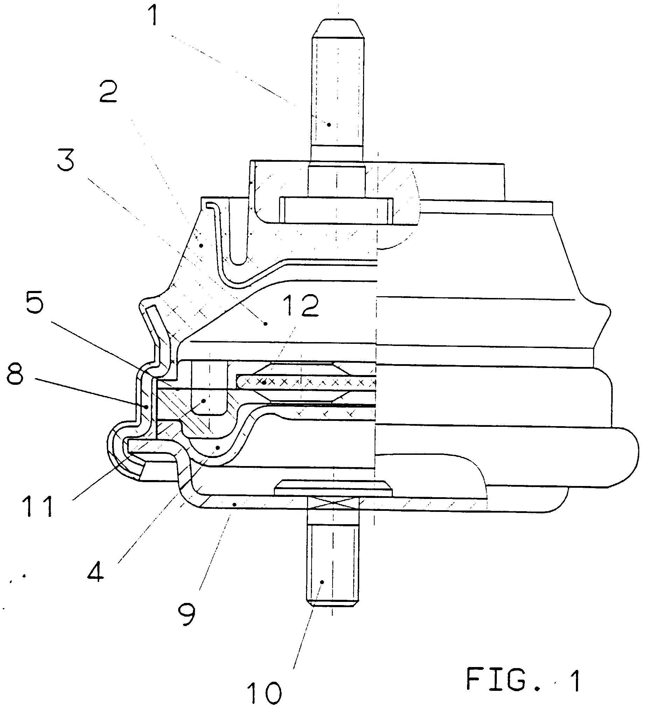

Figur 1 ein Motorlager zur Hälfte in Ansicht und zur Hälfte im vertikalen Schnitt in einer Achsebene,

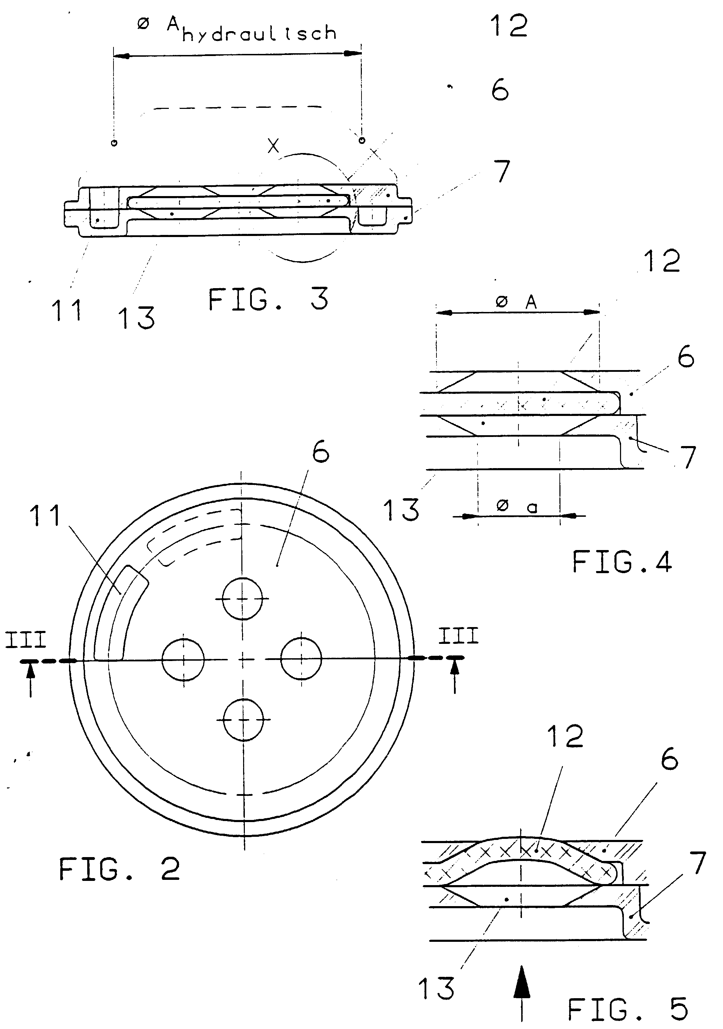

Figur 2 eine Draufsicht auf eine Ventilplatte,

Figur 3 einen Schnitt nach der Linie III - III in Figur 2,

Figur 4 die Einzelheit X bei entspannter Entkopplungsmembran und

Figur 5 die Einzelheit X bei ausgewölbter Entkopplungsmembran.

Bei dem Motorlager sind unterhalb eines mit einem Befestigungszapfen 1 ausgebildeten Federkörpers 2 zwei mit einer Dämpfungsflüssigkeit gefüllte Kammern 3 und 4 angeordnet, die durch eine Ventilplatte 5 aus zwei miteinander verspannten Scheiben 6 und 7 am Rande eingespannt sind. Ein oberes Gehäuseteil 8 und ein unteres Gehäuseteil 9 sind am Rande fest miteinander verbunden. Das untere Gehäuseteil 9 weist einen weiteren Befestigungszapfen 10 auf. In der aus den beiden Scheiben 6 und 7 bestehenden Ventilplatte 5 befindet sich ein Drosselkanal 11, der die beiden Kammern 3 und 4 miteinander verbindet und bei Schwingungen mit großer Amplitude einen Flüssigkeitsausgleich zwischen den beiden Kammern 3 und 4 wechselweise ermöglicht. Durch die geometrische Ausbildung der beiden Scheiben 6 und 7 der Ventilplatte 5 wird zwischen den beiden Scheiben 6 und 7 ein Käfig gebildet, der eine Entkopplungsmembran 12 aus einem elastisch verformbaren Werkstoff, zum Beispiel Gummi, aufnimmt. Die Entkopplungsmembran 12 ist mit ihrem Rand in einer Ausnehmung zwischen den beiden Scheiben 6 und 7 mit sanfter Vorspannung in axialer Richtung eingelegt, so daß sie sich bei Verformungen radial nach innen aus dieser Einspannung herausziehen und infolge ihrer Materialelastizität wieder einschieben kann. Die beiden den Käfig für die Entkopplungsmembran 12 bildenden Scheiben 6 und 7 weisen aufgrund der Spannungsverteilung in der Entkopplungsmembran 12 wenigstens je drei Durchbrechungen 13 mit einem durch schräge Begrenzungsflächen sich von der Entkopplungsmembran nach außen verjüngenden Querschnitt auf. Vorzugsweise sind Bohrungen mit einer konischen Senkung auf der der Entkopplungsmembran 12 zugewandten Seite vorgesehen, wie es sich aus den Zeichnungsfiguren 1, 3, 4 und 5 ergibt. Durch eine entsprechende Profilierung der Bohrungen kann erreicht werden, daß das bei der zu entkoppelnden Amplitude verdrängte Flüssigkeitsvolumen in den sich oberhalb der Entkopplungsmembran ausbildenden Ausbuchtungen aufgenommen werden kann, wobei der Eintrittsdurchmesser der Bohrung so ausgelegt ist, daß die Summensteifigkeit der Entkopplungsmembran auf die zulässige dynamische Verhärtung des Lagers abgestimmt ist. Vorzugsweise beträgt die sich durch den Eintrittsdurchmesser und die Anzahl der Bohrungen ergebende Gesamtfläche

$$A = 0{,}6 - 0{,}3 \times A_{hydraulisch},$$

wobei das Verhältnis zwischen dem Eintrittsquerschnitt und dem Austrittsquerschnitt vorzugsweise

$$a = 0{,}5 - 0{,}25 \times A$$

beträgt. Darin bedeutet:

$A$ = Bohrungsquerschnitt,
$A_{hydraulisch}$ = Hydraulisch wirksame Fläche.

Daraus ergibt sich eine Schräge der Senkung von etwa 45°. Die Härte des Werkstoffes der Entkopplungsmembran 12 ist aufgrund der gewählten Konusgeometrie anzupassen.

BEZUGSZEICHENLISTE:

1 Befestigungszapfen
2 Federkörper
3 Flüssigkeitskammer
4 Flüssigkeitskammer
5 Ventilplatte
6 Scheibe
7 Scheibe
8 Gehäuse
9 Gehäuse
10 Befestigungszapfen
11 Drosselkanal
12 Entkopplungsmembran
13 Durchbrechung

**Patentansprüche**

1. Motorlager mit hydraulischer Dämpfung für Kraftfahrzeuge, welches wenigstens zwei in einem Gehäuse mit wenigstens teilweise elastisch verformbaren Wandungen ausgebildete, mit einer Dämpfungsflüssigkeit gefüllte Kammern und eine gemeinsame Wand der Kammern mit einer Ventilplatte aufweist, in der in einen Käfig eine als Scheibe aus einem elastisch verformbaren Werkstoff ausge-führte Entkopplungsmembran angeordnet ist, wo-bei die Durchbrechungen des die Entkopplungsmembran ohne axiales Spiel senkrecht zur Kammerwand berührenden Käfigs durch schräge Begrenzungsflächen einen sich von der Entkopplungsmembran nach außen verjüngenden Querschnitt aufweisen,
dadurch gekennzeichnet, daß
der Rand der Entkopplungsmembran (12) mit sanfter axialer Vorspannung in einer Ausnehmung zwischen zwei als Käfig ausgebildeten Scheiben (6,7) einer Ventilplatte (5) - radial beweglich eingesetzt ist, und daß die Entkopplungsmembran einen gleichbleibenden Querschnitt aufweist.

2. Motorlager nach Anspruch 1,
dadurch gekennzeichnet, daß
die Käfigdurchbrechungen (13) vorzugsweise symmetrisch angeordnet und mit einer konischen Senkung auf der der Entkopplungsmembran (12) zugewandten Seite ausgeführt sind.

**Claims**

1. Engine mount with hydraulic damping for motor vehicles, which mount has at least two chambers which are constructed in a housing with at least partially elastically deformable wall systems and are filled with a damping fluid, and has a wall common to the chambers, with a valve plate in which an isolating diaphragm designed as a disc made of an elastically deformable material is disposed in a cage, while the openings in the cage, which touches the isolating diaphragm without axial play perpendicularly to the chamber wall, have, as a result of inclined boundary faces, a cross-section which tapers outwards from the isolating diaphragm,
characterised in that
the rim of the isolating diaphragm (12) is inserted in a radially movable manner, with light axial pre-tensioning, in a recess between two discs (6, 7) of a valve plate (5) which are constructed as a cage, and that the isolating diaphragm has an unchanging cross-section.

2. Engine mount according to claim 1,
characterised in that
the cage openings (13) are preferably disposed in a symmetrical manner and are designed with a conical depression on that side which faces towards the isolating diaphragm (12).

**Revendications**

1. Support de moteur à amortissement hydraulique pour véhicules automobiles, qui présente au moins deux chambres qui sont configurées dans un boîtier avec des parois au moins partiellement élastiquement déformables et qui sont remplies d'un liquide d'amortissement, et une paroi commune des chambres pourvue d'un tiroir de soupape dans lequel est disposée, dans une cage, une membrane de désaccouplement réalisée sous forme de disque en matériau élastiquement déformable, la cage entrant en contact avec la membrane de désaccouplement sans jeu axial perpendiculairement à la paroi des chambres et les percements de la cage présentant, par des faces de délimitation obliques, une section se rétrécissant depuis la membrane de désaccouplement vers l'extérieur,
**caractérisé** en ce que le bord de la membrane de désaccouplement (12) est insérée à mobilité radiale, avec une légère précontrainte axiale, dans un évidement entre deux disques (6, 7) d'un tiroir de soupape (5) qui sont réalisés sous forme de cage, et en ce que la membrane de désaccouplement présente une section constante.

2. Support de moteur selon la revendication 1, **caractérisé** en ce que les percements (13) de la cage sont, de préférence, symétriquement disposés et réalisés avec une fraisure conique sur le côté tourné vers la membrane de désaccouplement (12).

FIG. 1

FIG. 3

FIG. 4

FIG. 2

FIG. 5